Europäisches Patentamt

European Patent Office

Office européen des brevets

(19)

(11) Veröffentlichungsnummer: **0 297 434 B1**

## (12) EUROPÄISCHE PATENTSCHRIFT

(45) Veröffentlichungstag der Patentschrift: **19.02.92**

(21) Anmeldenummer: **88110026.7**

(22) Anmeldetag: **23.06.88**

(51) Int. Cl.⁵: **B31B 23/10**, B65H 23/192,
B29C 65/20

(54) **Verfahren zur Steuerung von Maschinen zur Herstellung von Beuteln oder Säcken.**

(30) Priorität: **29.06.87 DE 3721432**

(43) Veröffentlichungstag der Anmeldung:
**04.01.89 Patentblatt 89/01**

(45) Bekanntmachung des Hinweises auf die
Patenterteilung:
**19.02.92 Patentblatt 92/08**

(84) Benannte Vertragsstaaten:
**AT BE CH DE FR GB LI NL SE**

(56) Entgegenhaltungen:
**EP-A- 0 023 117**
**DE-C- 1 779 408**

(73) Patentinhaber: **Windmöller & Hölscher**
**Münsterstrasse 50**
**W-4540 Lengerich(DE)**

(72) Erfinder: **Feustel, Helmut, Dr. Dipl.-Ing.**
**Königsforstrasse 56c**
**W-5000 Köln 91(DE)**

(74) Vertreter: **Gossel, Hans K., Dipl.-Ing. Lorenz-**
**Seidler-Gossel et al**
**Widenmayerstrasse 23**
**W-8000 München 22(DE)**

EP 0 297 434 B1

**Beschreibung**

Die Erfindung betrifft ein Verfahren zur Steuerung von Maschinen zur Herstellung von Schlauch- oder Halbschlauchbahnen aus thermoplastischem Kunststoff abgeschweißten Beutein oder Säcken, wobei die Bahn über ein Vorzugswalzenpaar angetrieben wird, das unmittelbar von einem ersten Motor oder aber über ein Getriebe von diesem Motor angetrieben wird und wobei ein die Bahn mit Schweißnähten, Querschweißnähten oder Querschweißtrennähten versehendes Schweißbackenpaar über einen überbrückbaren Kurbeltrieb, der über ein Getriebe von einem zweten Motor angetrieben wird, derart gesteuert wird, daß dem Motor des Schweißbackenpaares bereits Antriebsenergie zugeführt wird, während der das Vorzugswalzenpaar antreibende Motor noch zum Antrieb des Vorzugswalzenpaar Antriebsenergie enthält und wobei nach der Stillstandsphase des Motors des Vorzugswalzenpaares dieser bereits angetrieben wird, bevor der Motor des Schweißbackenpaares zum Stillstand gekommen ist.

Die Weiterentwicklung von Taktschweißmaschinen zur Herstellung von Säcken oder Beutein aus thermoplastischem Kunststoff ist bedingt durch die üblichen Antriebssysteme an Grenzen gestoßen. Diese mit mechanischen Steuerungen versehenen Antriebssysteme genügten den Anforderungen vor etwa 20-25 Jahren voll und ganz, da die zu verarbeitenden Kunststoffolien selbst einer stürmischen Entwicklung ausgesetzt waren und somit verfahrenstechnische Aufgaben im Vordergrund standen.

Inzwischen hat die Entwicklung der Folien jedoch einen gewissen Endstand erreicht. Auch die Verarbeitungsmaschinen wurden stetig weiterentwickelt, so daß nunmehr Grenzen sichtbar werden. Eine Grenze ergibt sich hierbei daraus, daß bei den heute üblichen Maschinen ein gekoppeltes Antriebssystem verwendet wird, bei dem beispielsweise die Schweißzeit und die Folienvorzugszeit voneinander abhängig sind.

Normalerweise werden zum Antrieb der Vorzugswalzen und der Schweißbacken Kurbeltriebe oder Kurbelschwingenantriebe verwendet.

Wird ein einfacher Kurbeltrieb verwendet, entspricht näherungsweise die Vorzugszeit der Stillstandszeit, da sich die Stillstandszeit aus dem während des Rückhubes angekuppelten Antrieb ergibt. Die Schweißzeit braucht hier zunächst im Zyklus nicht berücksichtigt zu werden, da für sie nur ein Bruchteil des Rückhubes verwendet werden kann.

Eine Leistungsverbesserung läßt sich durch Kurbelschwingenantriebe erzielen. Aber auch bei derartigen Antrieben, bei denen der Rückhub gegenüber dem Vorzugshub verkürzt ist, wird für die Schweißzeit nur ein Bruchteil der Stillstandszeit benötigt, so daß immer noch ein die Leistung beeinträchtigender Zeitverlust eintritt. Auch bei Kurbelschwingenantrieben ist die Vorzugszeit von der Stillstandszeit abhängig und umgekehrt, die durch das getriebetechnisch vorgegebene Verhältnis bedingt ist. Diese unbefriedigende Abhängigkeit wird beispielsweise deutlich, wenn die Maschine für ein bestimmtes Beutelformat auf eine optimale Vorzugs- und Stillstandszeit ausgelegt ist. Wird bei einer derartigen Maschine die Vorzugslänge mit ungefähr doppelter Vorzugszeit verdoppelt, so verdoppelt sich auch die Stillstandszeit, obwohl die für das Schweißen an sich benötigte Zeit nich länger zu sein braucht.

Bereits aus der DE-B 1 779 408 ist ein Verfahren gemäß dem ersten Teil des Anspruchs 1 bekannt, in welchem ein Kurbeltrieb verwendet wird. Hier ist es zwar schon bekannt, gegen Ende eines jeden Vorziehschrittes der Schlauchbahn den Schweißwerkzeugantrieb so rechtzeitig einzuschalten, daß sich das Schweißwerkzeug bereits zu einem Zeitpunkt auf diese aufsetzt, in der der Stillstand der Schlauchbahn beginnt. Jedoch konnte man mit diesem vorbekannten Verfahren eine Leistungssteigerung bei der Herstellung von Beuteln nicht erzielen, da sich auch hier die Stillstandszeit aus dem während des Rückhubs angekuppelten Antriebs ergibt.

Die durch die gekoppelten mechanischen Antriebe bedingte Abhängigkeit läßt sich vermeiden, wenn für den Vorzug und die Schweißbacken getrennte Antriebe vorgesehen werden und diese Antriebe auch getrennt gesteuert werden.

Eine derartige eingangs beschriebene Vorrichtung könnte mit getrennten, das Vorzugswalzenpaar und die Schweißbacken antreibenden Motoren, z.B. Schrittmotoren, versehen sein, die von einer Steuereinrichtung derart gesteuert werden, daß nach Stillstand des Vorzugswalzenpaares dem letzten dem Schrittmotor des Vorzugswalzenpaares zugeführten Schrittimpuls folgende Schrittimpuls im Schrittmotor der Schweißbacken zugeführt wird, so daß unabhängig von der Vorzugslänge und damit von der für den Vorzug benötigten Zeit unmittelbar nach Stillstand der Bahn der Schweißbackenantrieb durch entsprechend zugeführte Schrittimpulse für eine Zeit eingeschaltet wird, die zur Ausführung der Schweißnaht benötigt wird. Nach Stillstand des die Schweißbacken antreibenden Schrittmotors kann dann der nächst folgende Schrittimpuls wieder dem die Vorzugswalzen antreibenden Schrittmotor zugeführt werden, so daß die Stillstandszeiten unabhängig von den Vorzugszeiten sind.

Aus der EP-A-0 023 117 ist bereits eine Steuervorrichtung bekannt, bei der programmgesteuerte Schrittmotoren das Vorzugswalzenpaar und die Schweißbacken antreiben.

Aufgabe der Erfindung ist es, ein Verfahren der eingangs angegebenen Art derart weiterzubilden, daß dessen Leistung trotz getrennter Antriebe für die Vorzugswalzen und die Schweißbacken noch gesteigert werden kann, wobei gleichzeitig gewährleistet ist, daß die Schweißzeit auch bei Variation der Taktzeit konstant bleibt.

Erfindungsgemäß wird diese Aufgabe bei einem Verfahren der eingangs angegebenen Art dadurch gelöst, daß die Motoren Schrittmotoren oder hochdynamische Asynchronmotoren sind, die über eine zentrale Recheneinheit derart gesteuert werden, daß die Stillstandszeiten der Bahn von den Vorzugszeiten unabhängig sind und daß der den überdrückbaren Kurbeltrieb antreibende Motor so gesteuert wird, daß er während jeder Umdrehung so beschleunigt und ohne Unterbrechungsphasen verzögert wird, daß die Schweißzeit, die dem Überdrückungsbereich des überdrückbaren Kurbeltriebs entspricht, immer einem geforderten Wert entspricht und daß der restliche Drehwinkel entsprechend der aktuellen Taktzahl durchlaufen wird.

Das erfindungsgemäße Verfahren ermöglicht also durch Entkoppelung der Antriebe der Vorzugswalzen und der Schweißbacken eine Leistungssteigerung nicht nur dadurch, daß die Stillstandszeiten, die auf die reinen Schweißzeiten begrenzt werden können, von den Vorzugszeiten unabhängig sind, sondern zusätzlich noch dadurch, daß die Laufzeiten der Motoren einander teilweise überlappen, so daß unter Vermeidung von Leerzeiten mit optimaler Leistung gefahren werden kann.

Ist die Herstellungsmaschine gegebenenfalls mit weiteren Bearbeitungsstationen, wie beispielsweise Stanzen, Perforationsmessern o.dgl., versehen, können auch die Antriebe der weiteren Bearbeitungsstationen aus Motoren bestehen, denen zumindest teilweise überlappend mit dem aus Vorzugszeit und Schweißzeit gebildeten Bearbeitungszyklus Antriebsenergie zugeführt wird.

Ein wesentliches Merkmal der Erfindung besteht nicht nur darin, daß die einzelnen Bearbeitungsstationen mit eigenen Motoren und Antrieben versehen sind, sondern insbesondere ist vorgesehen, daß die Motoren der einzelnen Bearbeitungsstationen miteinander zumindest teilweise überlappenden Betriebszeiten arbeiten können.

Die Schweißbackenantriebe von Schweißeinrichtungen bestehen aus Kurbelwellen, wobei sich die Schweißzeit aus einer sogenannten "Überdrückung" ergibt. Das heißt, ein einstellbarer Anteil des Drehwinkels der Kurbelwelle wird aufgrund einer Elastizität, die das "Überdrücken" ermöglicht, zum Schweißen genutzt. Der Rest des Drehwinkels dient dem Lüften und dem Zustellen der zu schweißenden Folien zum Schweißbacken. Die Kurbelwelle läuft dabei bei bekannten Maschinen mit konstanter Drehzahl um, so daß ein Maschinentakt einer Umdrehung entspricht. Da bei bekannten Maschinen der eingestellte Überdrük-

kungswinkel konstant bleibt, ist die tatsächliche Schweißzeit immer von der aktuellen Taktzahl abhängig.

Aus der DE-PS 17 79 408 ist es an sich bekannt, bei einem Schweißbackenantrieb zur Veränderung der Schweißzeiten den Antrieb des Kurbeltriebes in seiner Arbeitstotlage für eine vorbestimmte Zeitspanne stillzusetzen.

Nach einer weiteren vorteilhaften Ausgestaltung ist vorgesehen, daß vor der aus dem Schweißbackenpaar bestehenden Schweißeinrichtung mindestens zwei Vorzugswalzenpaare angeordnet sind, die eigene jeweils aus einem Motor und einem Getriebe bestehende Antriebseinheiten aufweisen.

Als Motoren sind Schrittmotoren vorgesehen, deren Drehzahl und Antriebs- sowie Stillstandszeiten durch die zugeführten Schrittimpulse steuerbar sind, oder hochdynamische Asynchronmotoren.

Die Lauf- und Stillstandszeiten der Motoren werden durch eine zentrale Recheneinheit gesteuert. Diese elektronische Recheneinheit arbeitet mit entsprechenden Programmen, die nicht Gegenstand dieser Erfindung sind.

Es wird eine Recheneinheit vorgesehen, die einen Führungsmotor steuert, der Impulse an eine die Motoren steuernde elektronische Antriebssteuerung abgibt.

Weiterhin kann die Recheneinheit, anstatt einen Führungsmotor zu steuern, eine Drehzahl simulieren, von der Impulse an eine die Motoren steuernde elektronische Antriebssteuerung abgeleitet werden.

Ausführungsbeispiele der Erfindung werden nachstehend anhand der Zeichnung näher erläutert. In dieser zeigt

Fig.1 eine Herstellungsmaschine mit zugehöriger Steuerung in schematischer Darstellung,

Fig.2 den Antrieb zweier Vorzugswalzenpaare und der Schweißeinrichtung durch jeweils getrennte Motoren in schematischer Seitenansicht und

Fig.3 einen überdrückbaren Kurbeltrieb zum Antrieb eines Schweißbackens in schematischer Seitenansicht in unterschiedlichen Winkelstellungen der Kurbel.

Die Maschine 1 zur Herstellung von Beuteln oder Säcken aus einer Schlauch- oder Halbschlauchbahn weist einen üblichen Bahnspeicher 2 auf, aus dem die beiden Vorzugswalzenpaare 3 intermittierend die Bahn jeweils um eine Abschnittlänge vorziehen. Die beiden Vorzugswalzenpaare 3 werden von einem gemeinsamen Motor 4 über übliche zwischengeschaltete Getriebe 5,6 oder aber auch unmittelbar von diesem angetrieben.

Zum gegenläufigen Antrieb der Schweißbacken des Schweißbackenpaares 7 ist der Schrittmotor 8 vorgesehen, der durch übliche Getriebeglieder 9 mit dem Schweißbacken 7 verbunden ist.

Zur Steuerung des einander teilweise überlappenden Antriebs der Motoren 4,8 ist eine zentrale Recheneinheit 10 vorgesehen. Die Dateneingabe die dei zentrale Recheneinheit erfolgt über die Tastatur 11.

Die zentrale Recheneinheit 10 kann aus einem winzigen Mikrocomputer bestehen, der mit entsprechend angepaßter Software arbeitet.

Als Steuereinheit 10 kann aber auch ein Zentralrechner 12 vorgesehen werden, dem von der Dateneingabe 11 über die Datenleitungen 13 die erforderlichen Daten, die beispielsweise die Vorzugszeit, die Schweißzeit und die Takte pro Minute betreffen, zugeführt werden.

Der Zentralrechner kann dann die Drehzahl des Führungsantriebes 14 ermitteln und gleichzeitig alle Maschinenfunktionen steuern und überwachen.

Werden als Antriebsmotoren hochdynamische Asynchronmotoren verwendet, gibt der Zentralrechner (NC-Steuerung) die Verfahrgeschwindigkeit und die Positionierung an.

Der Führungsantrieb 14 kann aus einem Motor bestehen, dessen Drehzahl der Zentralrechner vorgibt, und aus einem Winkelcodierer. Sind als Motore Schrittmotore vorgesehen, kann der Führungsantrieb eine elektronische Antriebssteuerung 15 steuern, die ihrerseits über die Schrittimpulse die Laufzeiten der Schrittmotore steuert. Die Schrittmotore können dabei mit Positionskontrolleinrichtungen 17,18 versehen sein, die die jeweiligen Positionen an den Zentralrechner zurückmelden. Schrittmotore sind jedoch nur ein Beispiel für in Frage kommende Motore. Grundsätzlich können als Antriebsmotore alle Motore verwendet werden, die steuerbar sind.

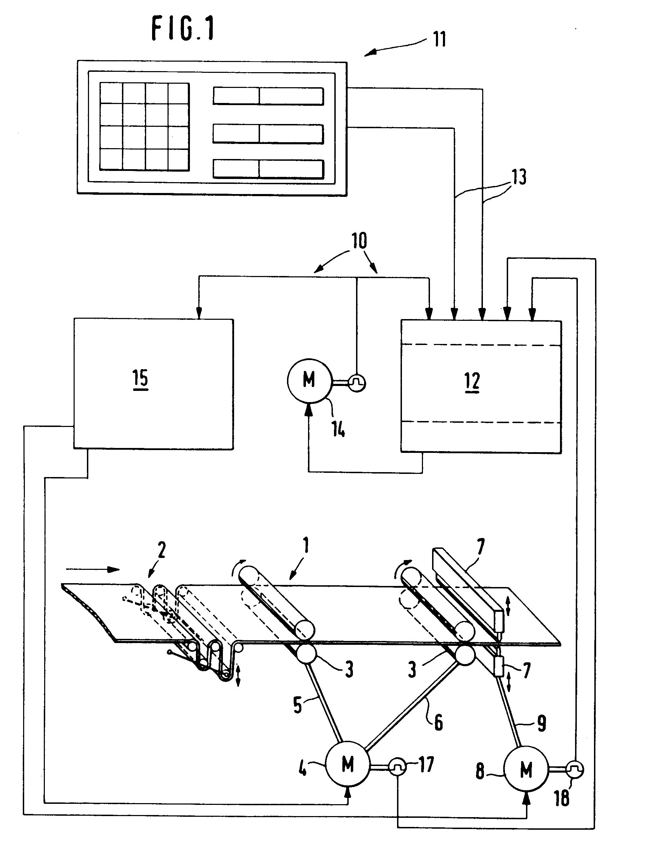

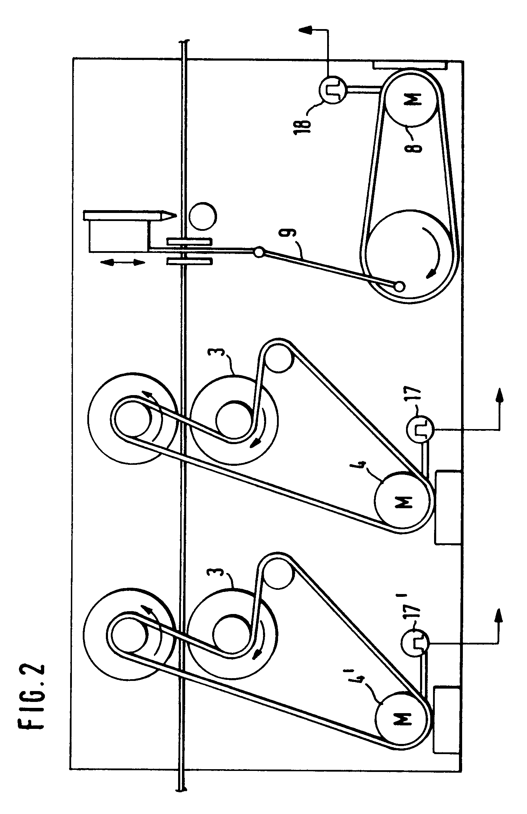

Bei dem Ausführungsbeispiel nach Fig.2 sind die beiden Vorzugswalzenpaare 3 nicht über einen gemeinsamen Motor 4 und über ein zwischengeschaltetes Getriebe 5, wie nach Fig. 1, sondern vielmehr über je einen Motor 4, 4′ angetrieben. Die Verwendung von zwei separaten Motoren 4,4′ für die beiden Vorzugswalzenpaare vermeidet unflexible Getriebe und ermöglicht es somit, die beiden Vorzugswalzenpaare auf einfache Art und Weise mit unterschiedlichen Drehzahlen zu betreiben, so daß die zwischen den Vorzugswalzenpaaren gewünschte Spannung der Folienbahn auf einfache Weise auf den gewünschten Wert eingestellt werden kann. Die einzelnen Vorzugswalzenpaare bilden weiterhin mit ihren Antrieben und Motoren Montageeinheiten, die sich erforderlichenfalls leicht austauschen lassen.

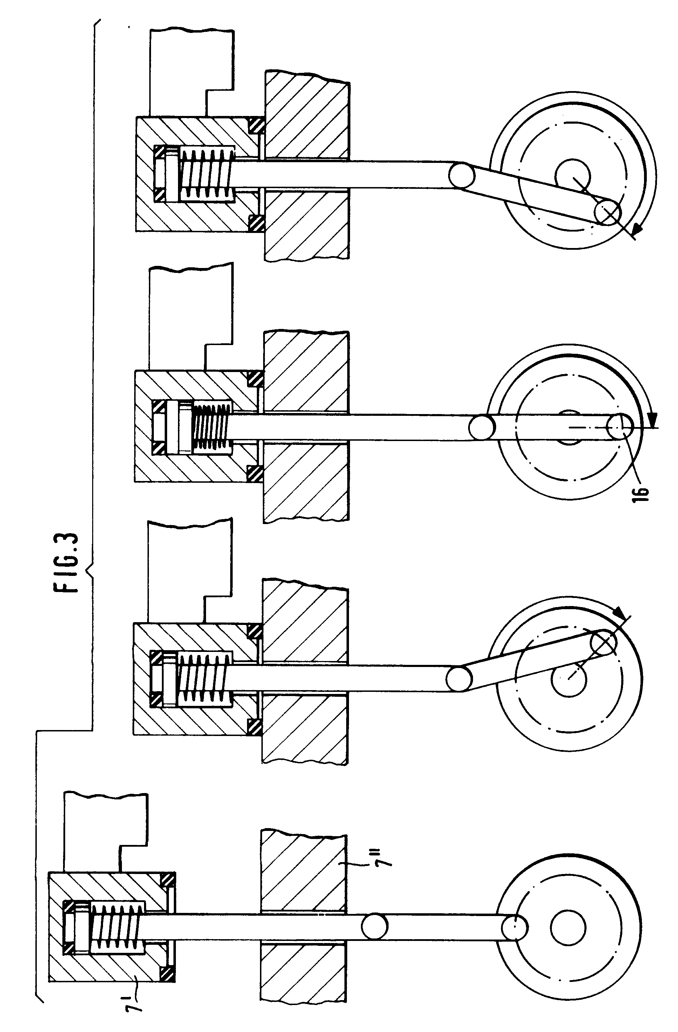

In Fig.3 ist eine von einem Kurbeltrieb angetriebene Schweißbacke 7′ dargestellt, die mit einer festen Gegenbacke oder Gegenleiste 7″ zusammenarbeitet. Die erste Phase der Fig.3 zeigt die von der Gegenleiste 7″ abgehobene obere Schweißbacke 7′. Die zweite Phase stellt den Zeitpunkt dar, in dem die obere bewegliche Schweißbacke 7′ gerade auf die feste Gegenleiste 7″ aufgesetzt hat. In der dritten Phase hat der Kurbelzapfen 16 seine untere Stellung erreicht, während er in der vierten Phase die Stellung erreicht hat, in der gerade die obere Schweißbacke 7′ wieder von der festen Unterlage 7″ abgehoben wird. Die zweite bis vierte Phase stellen somit die Überdrückungszeit und den während der Überdrückung zurückgelegten Kurbelwinkel dar. Aus Fig.3 wird deutlich, daß der obere Schweißbacken 7″ während der Phasen zwei bis vier auf dem Gegenlager 7″ aufruht, obwohl der Kurbelzapfen 16 während dieser Phasen einen bestimmten Winkelbereich durchläuft. Es findet also die beschriebene Überdrückung statt.

Bei bekannten Maschinen wurde bisher lediglich ein einstellbarer Anteil des Drehwinkels der Kurbelwelle zum Schweißen und der Rest des Drehwinkels zum Lüften und zum Zustellen des Schweißbackens verwendet. Dabei entspricht ein Maschinentakt einer Umdrehung der Kurbelwelle. Normalerweise bleibt der Überdrückungswinkel nach dem Einstellen fest, so daß die tatsächliche Schweißzeit immer von der aktuellen Taktzahl abhängig ist.

Erfindungsgemäß ist es nunmehr möglich, den Antriebsmotor 8 so zu schalten, daß beispielsweise der Schweißbalken nicht mit gleichbleibender Drehzahl betrieben wird, sondern während jeder Umdrehung so beschleunigt und verzögert wird, daß die Schweißzeit (Überdrückungsbereich) immer dem geforderten Wert entspricht und nur der restliche Drehwinkel entsprechend der aktuellen Taktzahl durchlaufen wird. Die Zeit, die der Kurbelzapfen 16 benötigt, um einen bestimmten Drehwinkel zu durchlaufen, kann folglich je nach Bedarf geändert werden.

Gegenüber einem Linearantrieb für die Schweißbackenbewegung hat der Kurbeltrieb den Vorteil der einfacheren Positionierung, wobei die Position "Schweißen" mit der höchstmöglichen Motordrehzahl durchfahren werden kann, ohne mit Drehzahl für die Richtungsumkehr des Schweißbalkens umkehren zu müssen. Bei einem Linearantrieb müßte die Position "Schweißen" mit Verzögerung angefahren und aus einem Stillstand heraus in entgegengesetzter Bewegungsrichtung wieder mit Beschleunigung verlassen werden.

**Patentansprüche**

1. Verfahren zur Steuerung von Maschinen zur Herstellung von von Schlauch- oder Halbschlauchbahnen aus thermoplastischem Kunststoff abgeschweißten Beuteln oder Säcken mit folgenden Schritten:

- die Bahn wird über ein Vorzugswalzenpaar (3) angetrieben, das unmittelbar von einem ersten Motor (4) oder aber über ein Getriebe (5, 6) von diesem Motor (4) angetrieben wird,
- ein die Bahn mit Schweißnähten, Querschweißnähten oder Querschweißtrennähten versehendes Schweißbackenpaar (7) wird über einen überdrückbaren Kurbeltrieb (16), der über ein Getriebe (9) von einem zweiten Motor (8) angetrieben wird, derart gesteuert, daß dem Motor (8) des Schweißbackenpaars (7) bereits Antriebsenergie zugeführt wird, während der das Vorzugswalzenpaar (3) antreibende Motor (4) noch zum Antrieb des Vorzugswalzenpaars (3) Antriebsenergie erhält und daß nach der Stillstandsphase des Motors (4) des Vorzugswalzenpaares (3) dieser bereits angetrieben wird, bevor der Motor (8) des Schweißbackenpaares (7) zum Stillstand gekommen ist,

**dadurch gekennzeichnet,**

daß die Motoren Schrittmotoren (4, 8) oder hochdynamische Asynchronmotoren sind, die über eine zentrale Recheneinheit (10) derart gesteuert werden,

daß die Stillstandszeiten der Bahn von den Vorzugszeiten unabhängig sind und

daß der den überdrückbaren Kurbeltrieb (16) antreibende Motor (8) so gesteuert wird, daß er während jeder Umdrehung so beschleunigt und ohne Unterbrechungsphasen verzögert wird, daß die Schweißzeit, die dem Überdrückungsbereich des überdrückbaren Kurbeltriebs (16) entspricht, immer einem geforderten Wert entspricht und daß der restliche Drehwinkel entsprechend der aktuellen Taktzahl durchlaufen wird.

2. Verfahren nach Anspruch 1, dadurch gekennzeichnet, daß als Recheneinheit (10) ein Zentralrechner (12) einen Führungsmotor (14) steuert, der Impulse an eine die Motoren steuernde elektronische Antriebssteuerung abgibt.

3. Verfahren nach Anspruch 1, dadurch gekennzeichnet, daß als Recheneinheit (10) ein Zentralrechner (12) eine Drehzahl simuliert, von der Impulse an eine die Motoren steuernde elektronische Antriebssteuerung abgeleitet werden.

**Claims**

1. Method of controlling machines for producing bags or sacks sealed and severed from tubular or semi-tubular webs of thermoplastic material, comprising the following steps:
   - the web is driven over a pair of drawing-forward rollers (3), which are driven directly by a first motor (4) or else by this motor (4) by means of a gear (5,6),
   - a pair of welding jaws (7), providing the web with welds, transverse welds or transverse separating welds, is controlled by means of a pressurisable crank drive (16), which is driven by a second motor (8) by means of a gear (9), in such a way that the motor (8) of the pair of welding jaws (7) is already supplied with driving energy while the motor (4) driving the pair of drawing-forward rollers (3) is still receiving driving energy for driving the pair of drawing-forward rollers (3) and in that, after the standstill phase of the motor (4) of the pair of drawing-forward rollers (3), the said motor is already driven before the motor (8) of the pair of welding jaws (7) has come to a standstill,

characterised in that the motors are stepping motors (4,8) or highly dynamic asynchronous motors, which are controlled by means of a central processing unit (10), in that the standstill times of the web are independent of the drawing-forward times and in that the motor (8) driving the pressurisable crank drive (16) is controlled in such a way that during each revolution it is accelerated and decelerated without interruption phases such that the welding time, which corresponds to the pressurising range of the pressurisable crank drive (16), always corresponds to a required value and that the remaining angle of rotation is completed according to the current cycle time.

2. Method according to Claim 1, characterised in that, as processing unit (10), a central processor (12) controls a master motor (14), which emits pulses to an electronic drive control, controlling the motors.

3. Method according to Claim 1, characterised in that, as processing unit (10), a central processor (12) simulates a speed of rotation from which pulses to an electronic drive control, controlling the motors, are derived.

**Revendications**

1. Procédé de commande pour des machines servant à fabriquer des sacs ou des sachets détachés par soudure de feuilles continues en gaine ou demi-gaine en matière synthétique thermoplastique comportant les étapes suivantes :

- la feuille continue est mise en mouvement par l'intermédiaire d'une paire de rouleaux d'avancement (3) actionnée directement par un premier moteur (4) ou encore par l'intermédiaire d'une transmission (5,6) de ce moteur (4),
- une paire de mâchoires de soudure (7), garnissant la feuille continue de cordons de soudure, de cordons transversaux de soudure ou de cordons de séparation de soudure transversaux, est commandée par l'intermédiaire d'un mécanisme à bielle et manivelle (16) surcompressible actionné au moyen d'une transmission (9) d'un deuxième moteur (8), de manière que l'énergie de fonctionnement soit déjà fournie au moteur (8) de la paire de mâchoires de soudure (7), alors que le moteur (4) actionnant la paire de rouleaux d'avancement (3) est encore alimenté en énergie pour actionner la paire de rouleaux d'avancement (3) et que, après la phase d'arrêt de ce dernier moteur (4), celui-ci soit déjà alimenté avant que le moteur (8) de la paire de mâchoires de soudure (7) ne soit arrêté,

caractérisé en ce que

les moteurs sont des moteurs pas à pas (4,8) ou des moteurs asynchrones à haute dynamique commandés par l'intermédiaire d'une unité centrale de calcul (10), de manière

que les temps d'arrêt de la feuille continue soient indépendants des temps d'avancement et

en ce que le moteur (8) actionnant le mécanisme à bielle et manivelle surcompressible (16) est commandé de manière qu'il soit, pendant chaque rotation, accéléré et, sans phases de discontinuité, décéléré, de sorte que le temps de soudure, qui correspond à la plage de surcompression du mécanisme à bielle et manivelle surcompressible (16) corresponde toujours à une valeur exigée et que l'angle de rotation restant soit parcouru conformément au nombre actuel de cycles.

2. Procédé selon la revendication 1, caractérisé en ce que l'unité de calcul (10) est un ordinateur central (12) commandant un moteur de guidage (14), qui envoie des impulsions à une commande électronique d'entraînement des moteurs.

3. Procédé selon la revendication 1, caractérisé en ce que l'unité de calcul (10) est un ordinateur central (12) simulant une vitesse de rotation, à partir de laquelle des impulsions sont acheminées sur une commande électronique des moteurs.

FIG.1

EP 0 297 434 B1

FIG.2

8

FIG.3

EP 0 297 434 B1